# EUROPÄISCHE PATENTSCHRIFT

(11) **EP 3 325 902 B1**
(45) Veröffentlichungstag und Bekanntmachung des Hinweises auf die Patenterteilung: **07.08.2019**
(21) Anmeldenummer: 16735599.9
(22) Anmeldetag: 23.06.2016
(51) Int. Cl.: F25D 29/00

(54) **BETREIBEN EINER KAMERA EINES HAUSHALTSGERÄTS**
OPERATING A CAMERA OF A HOUSEHOLD APPLIANCE
PROCÉDÉ PERMETTANT DE FAIRE FONCTIONNER UNE CAMÉRA D'UN APPAREIL MÉNAGER

(30) Priorität: 22.07.2015 DE 102015213780
(43) Veröffentlichungstag der Anmeldung: 30.05.2018
(73) Patentinhaber: BSH Hausgeräte GmbH, 81739 München (DE)
(72) Erfinder: WERNER, Hans Peter, 89537 Giengen (DE); WETZL, Gerhard, 89567 Sontheim (DE)
(86) Internationale Anmeldenummer: PCT/EP2016/064489
(87) Internationale Veröffentlichungsnummer: WO 2017/012818

(56) Entgegenhaltungen:
- EP-A1- 2 843 337
- WO-A1-2014/175643
- US-A1- 2014 293 060

## Beschreibung

Die Erfindung betrifft ein Verfahren zum Betreiben einer Kamera eines Haushaltsgeräts, wobei mit Öffnen einer Tür des Haushaltsgeräts eine Kalibrierung der Kamera durchgeführt wird und auf ein Erreichen einer vorgegebenen Winkelstellung der Tür hin ein Triggersignal zum Auslösen der Kamera ausgegeben wird. Die Erfindung betrifft auch ein Haushaltsgerät mit mindestens einer Kamera zur Aufnahme eines Bilds von zumindest einem Teil eines Innenraums des Haushaltsgeräts. Die Erfindung ist insbesondere vorteilhaft anwendbar auf Kühlschränke.

US 2014/0293060 A1 offenbart einen Kühlschrank. Der Kühlschrank kann einen Korpus mit einem Ablageraum aufweisen, wobei eine erste Tür drehbar an einer ersten Seite des Korpus befestigt ist, um einen ersten Teil des Ablageraums zu öffnen und zu verschließen, und eine zweite Tür drehbar an einer zweiten Seite des Korpus befestigt ist, um einen zweiten Teil des Ablageraums zu öffnen und zu verschließen. Eine erste Kamera kann an der ersten Tür angeordnet sein, um ein Bild eines Inneren des ersten Ablageraums während einer Drehung der ersten Tür aufzunehmen. Eine zweite Kamera kann an der zweiten Tür angeordnet sein, um ein Bild eines Inneren des ersten Ablageraums während einer Drehung der zweiten Tür aufzunehmen. Ein Controller kann mehrere von der ersten Kamera und der zweiten Kamera aufgenommene Bilder kombinieren, um eine einzige korrigierte Aufnahme eines Bereichs des ersten Ablageraums zu erhalten, welche von der ersten Tür zu der zweiten Tür reicht. Hierbei ist nachteilig, dass der Aufwand zur Aufnahme der Bilder hoch ist.

So befinden sich die Kameras bei geschlossenen Türen in einem Standby-Modus, aus dem sie mit Öffnen der jeweiligen Tür aufgeweckt werden. Mit dem Aufwecken durchlaufen die Kameras eine erste "Basiskalibrierung", welche z.B. ein Löschen der Ladungen von Sensorzellen des Bildsensors der Kamera ("Reset"), eine Helligkeitsanpassung usw. umfasst. Die Kameras warten dann auf ein Triggersignal, das erzeugt wird, wenn ein jeweiliger Winkelsensor eine bestimmte Winkelposition der Tür(en) beim Öffnen oder Schließen detektiert. Kommt das Triggersignal, wird zunächst eine zweite "Zusatzkalibrierung" durchgeführt, die einen Weißabgleich und eine Anpassung einer Brennweite umfasst. Nun werden mehrere Bilder aufgenommen, die entsprechend den Kalibrierungsdaten bearbeitet werden. Aus den mehreren Bildern wird dasjenige Bild zur Objekterkennung in dem Ablageraum usw. ausgesucht, welches ein bestes Ergebnis liefert.

Es ist die **Aufgabe** der vorliegenden Erfindung, die Nachteile des Standes der Technik zumindest teilweise zu überwinden und insbesondere eine einfachere Möglichkeit zur Aufnahme von Bildern eines Innenraums eines Haushaltsgeräts bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Betreiben einer Kamera eines Haushaltsgeräts, bei dem mit Öffnen einer Tür des Haushaltsgeräts eine Kalibrierung der Kamera durchgeführt wird, auf ein Erreichen (d.h., auf ein Erreichen oder Überschreiten) einer vorgegebenen Winkelstellung der Tür hin ein Triggersignal zum Auslösen der Kamera ausgegeben wird und die Kamera auf das Triggersignal hin mindestens ein Bild unter Unterlassung eines Farbabgleichs hin aufnimmt.

Dadurch, dass die Kamera auf das Empfangen des Triggersignals keinen Farbabgleich durchzuführen braucht, wird die Zeit zwischen dem Empfang des Triggersignals und einem Beginn der Bildaufnahme verkürzt. So wird eine Kenntnis der Position, an der sich die Tür zu Beginn der Bildaufnahme befindet, erheblich verbessert. Dadurch wiederum werden weniger Aufnahmen benötigt, um ein gelungenes (z.B. zur Weiterverarbeitung, beispielsweise Objekterkennung, geeignetes) Bild zu erzeugen. Dies ermöglicht eine besonders einfache und preiswerte Möglichkeit zur Aufnahme von Bildern eines Innenraums eines Haushaltsgeräts.

Das Ausgeben des Triggersignals kann auch davon abhängen, ob die Winkelstellung der Tür bei einem Öffnen der Tür oder bei einem Schließen der Tür erreicht bzw. überschritten wird.

Es ist eine Weiterbildung, dass die Kamera eine Digitalkamera ist. Die Kamera kann Einzelbilder und/oder Bildfolgen aufnehmen. Ein Bildsensor der Kamera kann ein CCD-Sensor oder ein CMOS-Sensor sein. Der Bildsensor kann einen sog. elektronischen Shutter aufweisen, der z.B. nach dem Global-Shutter-Verfahren oder nach dem Rolling-Shutter-Verfahren betreibbar ist.

Der Bildsensor kann auch als "Imager" bezeichnet werden und kann neben den typischerweise matrixartig angeordneten Sensorelementen oder Sensorzellen weitere Halbleiterstrukturen aufweisen, z.B. einen Oszillator, einen "Bias-Generator", einen A/D-Wandler, einen Speicher, eine Ablaufsteuerung, eine Logik usw.

Die Kamera kann zusätzlich zu dem Bildsensor eine Elektronik zum Verarbeiten von dem Bildsensor erzeugten Bilddaten und/oder zum Ansteuern des Bildsensors aufweisen. Die Elektronik kann z.B. dazu eingerichtet sein, bestimmte Modi und/oder andere Einstellungen des Bildsensors einzustellen. Die Elektronik kann einen digitalen Signalprozessor (DSP), ein ASIC, einen FPGA usw. aufweisen.

Die Kamera kann ferner eine insbesondere mit der Elektronik verbundene Schnittstelle (z.B. eine USB-Schnittstelle) aufweisen, um die Kamera beispielsweise mit einer Steuereinrichtung des Haushaltsgeräts zu verbinden. Die Kamera kann Bilder über die Schnittstelle z.B. im JPEG-, PNG-, GIF, TIFF- oder BMP-Format usw. ausgeben.

Aus Sicht der Kamera mit Bildsensor und Elektronik kann das Verfahren beispielsweise umfassen, dass die Kamera zunächst nach dem Öffnen der Tür ein Signal zum Hochfahren der Kamera erhält. Daraufhin fährt der Bildsensor eigenständig oder im Zusammenspiel mit der Elektronik hoch bzw. wird initialisiert. Auch die Elektronik kann hochfahren bzw. initialisiert werden, wobei die Initialisierungen von Elektronik und Bildsensor so aufeinander abgestimmt sein können, dass zuerst Routinen geladen werden, welche den verfahrensgemäßen Betrieb des Bildsensors ermöglichen und dann erst Routinen, insbesondere der Elektronik, die weniger zeitkritisch sind und die eine Bildaufnahme nicht behindern, z.B. Routinen zur Bildverarbeitung oder Bildübertragung. Mit Empfang oder Erhalt des Triggersignals an der Elektronik, ggf. bevor dessen weniger zeitkritischen Routinen geladen worden sind, reicht die Elektronik das Triggersignal an den aufnahmebereiten Bildsensor weiter, woraufhin der Bildsensor eine Aufnahme macht und das zugehörige Bild der Elektronik bereitstellt. Nach abgeschlossener Initialisierung der Elektronik kann diese das Bild weiterverarbeiten.

Es ist eine Weiterbildung, dass die Kamera mit einem mechanischen Verschluss ausgestattet ist, insbesondere wenn der Bildsensor ein Rolling-Shutter-Bildsensor ist. Dies ermöglicht mit einfachen und preiswerten Mitteln scharfe Aufnahmen von sich bewegenden Objekten. Insbesondere kann der Verschluss nur für eine Zeitdauer geöffnet sein, in der alle Sensorelemente oder Sensorzellen gleichzeitig empfindlich sind bzw. auf Bildaufnahme geschaltet sind. Dies ist besonders vorteilhaft im Zusammenhang mit Rolling-Shutter-Bildsensoren, deren Sensorelemente gleichzeitig empfindlich geschaltet werden können (sog. "Global-Start-"Modus). Ein Ladungstransfer von den Sensorelementen und ein folgendes Auslesen von Daten kann bei wieder geschlossenem Verschluss durchgeführt werden, und zwar auch dann, wenn - wie bei dem Rolling-Shutter-Verfahren üblich - dies zeilenweise zeitversetzt geschieht. Der Rolling-Shutter-Bildsensor ist vorzugsweise ein preiswerter CMOS-Sensor.

Die Kamera kann ferner eine dem Bildsensor vorgeschaltete Optik aufweisen, beispielsweise eine CRA ("Chief Ray Angle")-Optik, die z.B. Mikrolinsen zur Vermeidung eines Fischaugen-Effekts nutzt.

Das Durchführen der Kalibrierung mit Öffnen der Tür des Haushaltsgeräts umfasst insbesondere ein Durchführen der Kalibrierung unmittelbar nachdem ein Öffnen der Tür festgestellt worden ist, z.B. über einen Türöffnungsschalter.

Es ist eine Weiterbildung, dass mit dem Öffnen der Tür ein Licht eines durch die Tür verschließbaren Ablageraums angeschaltet wird.

Die Kalibrierung wird automatisch von der Kamera durchgeführt und kann eine Einstellung der Helligkeit, ein Löschen ("Reset") der Ladungen der Sensorelemente, ein Einstellen eines Offsets usw. umfassen.

Es ist eine Weiterbildung, dass die Kalibrierung der Kamera mit Erreichen bzw. Überschreiten der Winkelstellung der Tür unter Annahme üblicher Dauern zum Öffnen und Schließen der Tür (z.B. von mindestens einer Sekunde) abgeschlossen ist. So wird die Verzögerung zwischen einem Empfang des Triggersignals an der Kamera und der Bildaufnahme besonders stark reduziert.

Es ist eine Ausgestaltung, dass mit bzw. im Rahmen der Kalibrierung mindestens einer Kamera ein Farbabgleich durchgeführt wird. Dies ergibt den Vorteil, dass die Zeit zwischen dem Öffnen der Tür und dem Erreichen der vorgegebenen Winkelstellung der Tür für die Durchführung des Farbabgleichs genutzt wird und nicht wie bisher von der Kamera erst nach dem Empfang des Triggersignals durchgeführt wird. Dies ist insbesondere bei schnell bewegten Türen vorteilhaft.

Der Farbabgleich dient dazu, die Kamera auf die Farbtemperatur des Lichtes am Aufnahmeort zu sensibilisieren. Es ist eine Weiterbildung, dass der Farbabgleich ein Weißabgleich ist, mittels dessen die Kamera auf eine möglichst getreue Wiedergabe eines Weißwerts am Aufnahmeort eingestellt wird.

Der Farbabgleich kann beispielsweise so durchgeführt werden, dass mittels des Bildsensors ein zur Kalibrierung verwendetes Bild ("Kalibrierungsbild") aufgenommen wird und folgend Algorithmen zum Farbabgleich auf das Kalibrierungsbild angewandt werden. Mittels des Ergebnisses dieses Farbabgleichs erfolgt die Kalibrierung des Bildsensors. Der Farbabgleich kann in der Kamera durchgeführt werden, insbesondere durch die mit dem Bildsensor verbundene Elektronik. Das Kalibrierungsbild wird von der Kamera vorteilhafterweise nicht ausgegeben.

Es ist noch eine Ausgestaltung, dass mindestens eine Kamera farbabgleichsfrei betrieben wird. Dies kann umfassen, dass weder mit der Kalibrierung dieser Kamera (nach Öffnen der Tür) noch auf das Triggersignal hin ein Farbabgleich durchgeführt wird. So wird besonders zuverlässig sichergestellt, dass die Kamera auf das Triggersignal hin eine Bildaufnahme mit einer geringen Verzögerung durchführen kann, und zwar auch bei sehr schnell bewegten Türen. Bei dieser Ausgestaltung wird ausgenutzt, dass ein Ablageraum in einem Korpus des Haushaltsgeräts mit Öffnen der Tür durch eine eingebaute Beleuchtungseinrichtung beleuchtet wird und deshalb die Beleuchtungsbedingungen - insbesondere eine Farbtemperatur - zumindest annähernd bekannt sind. Auch wird ausgenutzt, dass sich die Beleuchtungsbedingungen in dem Ablagefach durch von außen einfallendes Licht und durch die Menge und Beschaffenheit von abgelegten Objekten in der Regel nicht wesentlich ändern. Somit kann auf einen Farbabgleich oder eine Farbkorrektur ganz verzichtet werden oder eine Farbkorrektur - insbesondere Anpassung einer Farbtemperatur - außerhalb der Kamera durch eine nachträgliche Bildbearbeitung aufgenommener Bilder mit vorbekannten Parametern umgesetzt werden.

Es ist eine weitere Ausgestaltung, dass das Haushaltsgerät eine erste Kamera zum Aufnehmen eines Bilds eines Ablageraums und eine zweite Kamera zum Aufnehmen eines Bilds einer Innenseite der Tür aufweist und an einem von der zweiten Kamera aufgenommenen Bild eine Farbkorrektur - insbesondere Anpassung einer Farbtemperatur - mittels eines von der ersten Kamera aufgenommenen Bilds durchgeführt wird. Auch diese Ausgestaltung kann ohne Farbabgleich der Kameras durchgeführt werden. Vielmehr wird hier das Bild des Ablageraums als Farbreferenz für das zweite Bild verwendet. Dabei wird ausgenutzt, dass die Farbtemperatur des Bilds des Ablageraums gut bekannt ist, jedoch die Beleuchtungsbedingungen an einer Innenseite einer geöffneten Tür aufgrund des starken Lichteinfalls von außen und aufgrund einer fehlenden Eigenbeleuchtung stark schwanken können. Auch kann ausgenutzt werden, dass eine Farbe einer Wand (z.B. weiß) des Ablagefachs und der Innenseite der Tür gleich ist, so dass durch Abgleich von Wandstellen eine Farbkorrektur besonders einfach durchführbar ist.

Es ist noch eine weitere Ausgestaltung, dass die Farbkorrektur außerhalb des Haushaltsgeräts durchgeführt wird. Dadurch braucht keine Verarbeitungskapazität in dem Haushaltsgerät vorgehalten zu werden. Das Haushaltsgerät kann dazu mit einer externen Datenverarbeitungseinrichtung verbunden sein, beispielsweise einem externen Server. Die aufgenommenen Bilder können auf dem externen Server oder in einem dezentralen Speicher abgespeichert werden, z.B. in der sog. "Cloud".

Alternativ kann die Farbkorrektur von dem Haushaltsgerät durchgeführt werden, beispielsweise mittels einer Datenverarbeitungseinrichtung, insbesondere mittels einer Bildbearbeitungseinrichtung.

Es ist ferner eine Ausgestaltung, dass die Kamera einen festen Fokus bzw. eine feste Brennweite aufweist. Dies ergibt den Vorteil, dass die Kamera mit Empfangen des Triggersignals keine automatische Brennweiteneinstellung ("Autofokus") durchzuführen braucht. Dies verkürzt eine Zeitdauer zwischen dem Empfangen des Triggersignals und der Bildaufnahme noch weiter. Auch lassen sich so besonders einfache und preiswerte Kameras einsetzen. Hierbei wird ausgenutzt, dass mit Wegfall des Farbabgleichs und der Brennweiteneinstellung die Kamera unmittelbar bzw. praktisch verzögerungsfrei mit Erhalt des Triggersignals eine Bildaufnahme durchführen kann. Daher ist die Position der Kamera bei der Bildaufnahme mit besonders hoher Genauigkeit bekannt, und zwar praktisch unabhängig von einer Winkelgeschwindigkeit der Tür. Folglich kann zum Aufnehmen scharfer Bilder insbesondere auch eine Kamera verwendet werden, deren feste Brennweite auf die vorgegebene Winkelstellung der Tür zum Auslösen des Triggersignals abgestimmt ist.

Es ist auch eine Ausgestaltung, dass die Kamera auf das Triggersignal hin genau ein Bild aufnimmt. Dies erleichtert eine Bildverarbeitung und/oder eine Bildauswertung. Diese Ausgestaltung wird möglich, da durch den Verzicht auf den Farbabgleich und insbesondere zusätzlich auch auf die Brennweiteneinstellung in der Kamera bereits ein Bild mit ausreichend hoher Schärfe aufgenommen werden kann.

Es ist auch eine Ausgestaltung, dass die Kamera mit Schließen der Tür ausgeschaltet wird. Unter einer ausgeschalteten Kamera kann insbesondere eine Kamera verstanden werden, die stromlos geschaltet ist. So kann Strom gespart werden und eine Lebensdauer der Kamera verlängert werden. In der Regel umfasst diese Ausgestaltung auch, dass die Kamera vor einem Öffnen der Tür ausgeschaltet ist (und sich z.B. nicht nur in einem Standby-Modus befindet). Mit dem Öffnen der Tür erfolgt dabei somit ein Einschalten und dadurch ein Hochfahren der Kamera. Das Hochfahren der Kamera kann z.B. ein Booten, einen Speichertest und mindestens eine Initialisierungsroutine umfassen. Das Ausschalten der Kamera mit Schließen der Tür kann umfassen, dass das Schließen der Tür eine notwendige, aber nicht hinreichende Bedingung zum Ausschalten ist. So mag die Kamera erst ausgeschaltet werden, wenn sowohl die Tür geschlossen worden ist als auch eine Bildübertragung von der Kamera abgeschlossen ist.

Die Aufgabe wird auch gelöst durch ein Haushaltsgerät mit mindestens einer Kamera zur Aufnahme zumindest eines Teils eines Innenraums das Haushaltsgeräts, wobei das Haushaltsgerät dazu eingerichtet ist, mindestens eine Kamera gemäß dem Verfahren wie oben beschrieben zu betreiben.

Es ist eine Weiterbildung, dass das Haushaltsgerät ein Kühlgerät ist, insbesondere ein Kühlschrank und/oder eine Gefriertruhe bzw. ein Gefrierschrank. Das Haushaltsgerät kann eine Tür oder mehrere Türen aufweisen. Die Tür kann mindestens einen in einem Korpus des Haushaltsgeräts vorhandenen Ablageraum verschließen. Die Tür kann innenseitig zur Aufnahme mindestens eines Objekts ausgebildet sein und dazu ein oder mehrere Ablagefächer aufweisen (z.B. einen Flaschenhalter, ein Butterfach, eine Eierablage usw.). Das Vorhandensein einer Kamera in dem Kühlschrank kann auch als "Camera-in-Fridge", CiF, bezeichnet werden.

Insbesondere für den Fall eines Kühlschranks kann dieser mindestens eine Kamera zur Aufnahme mindestens eines in einem Korpus vorhandenen Ablagefachs und mindestens eine Kamera zur Aufnahme einer Innenseite mindestens einer jeweiligen Tür aufweisen.

Insbesondere für den Fall, dass das Haushaltsgerät mehrere Kameras aufweist, können diese mit einer gemeinsamen Steuereinrichtung verbunden sein. Die Steuereinrichtung kann mit einem Öffnungssensor, der ein Öffnen und Schließen der Tür erkennen kann, und mit einem Sensor ("Winkelsensor"), der eine Anwesenheit der Tür bei einer bestimmten Winkelstellung erkennen kann, verbunden sein. Die Steuereinrichtung kann basierend auf dem Öffnungssensor und/oder dem Winkelsensor, die mit ihm verbundenen Kameras gruppenweise oder individuell ansteuern. Beispielsweise kann die Steuereinrichtung mittels des Öffnungssensors ein Öffnen oder Schließen einer Tür erkennen und folgend die Kameras einschalten (z.B. durch Einschalten einer Spannungsversorgung oder durch Aussenden eines Einschaltsignals) bzw. ausschalten. Die Steuereinrichtung kann ferner basierend auf dem Winkelsensor ein Erreichen einer vorgegebenen Winkellage der Tür insbesondere bei einem Schließvorgang der Tür erkennen und entsprechende Triggersignale an die Kameras zur Bildaufnahme ausgeben. Dies kann analog für nur eine Kamera gelten.

Das Haushaltsgerät kann mindestens eine drahtlos oder drahtgebundene Datenschnittstelle aufweisen, z.B. eine Ethernet-Schnittstelle, eine Bluetooth-Schnittstelle usw. Das Haushaltsgerät kann über die Datenschnittstelle z.B. mit einer externen Bildbearbeitungseinrichtung verbunden sein. Das Haushaltsgerät kann über die Datenschnittstelle beispielsweise Bilder sowie zugehörige Information übermitteln und Bilder sowie zugehörige Information empfangen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Draufsicht ein Haushaltskühlgerät in Form eines Kühlschranks; und
- Fig.2: zeigt ein Ablaufdiagramm zum Durchführen eines Verfahrens zum Betreiben einer Kamera des Haushaltsgeräts.

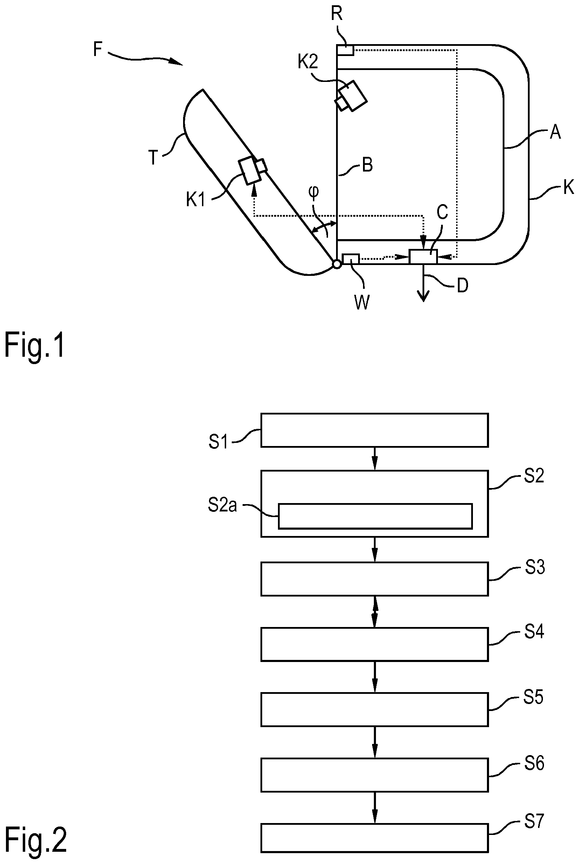

**Fig.1** zeigt als Schnittdarstellung in Draufsicht ein Haushaltskühlgerät in Form eines Kühlschranks F mit einem Nutz- oder Ablageraum A, dessen vorderseitige Beschickungsöffnung B mittels einer verschwenkbaren Tür T verschließbar ist. In der Tür T ist eine erste Kamera K1 angeordnet. Zusätzlich ist an dem Korpus F eine zweite Kamera K2 angeordnet, die auf die Innenseite der Tür T gerichtet ist. Die beiden Kameras K1 und K2 weisen beide eine feste Brennweite auf.

Der Kühlschrank F weist ferner einen Türöffnungssensor R und einen Winkelsensor W auf, die beide mit einer Steuereinrichtung C verbunden sind. Auch die Kameras K1 und K2 sind mit der Steuereinrichtung C verbunden.

Die Steuereinrichtung C kann mittels des Türöffnungssensors R ein Öffnen und Schließen bzw. einen geöffneten und einen geschlossenen Zustand der Tür T feststellen. Die Steuereinrichtung C kann mittels des Winkelsensors W erkennen, wann die Tür T bei z.B. einer Schließbewegung eine vorgegebene ("Auslöse-")Winkelstellung ϕ erreicht oder überschritten hat.

Die Steuereinrichtung C ist ferner dazu eingerichtet, mit Erkennen eines Öffnens der Tür T die beiden bis dahin ausgeschalteten Kameras K1 und K2 anzuschalten (z.B. durch Ausgeben eines entsprechenden Signals), was auch als ein Schritt S1 in **Fig.2** gezeigt ist.

Die Kameras K1 und K2 führen daraufhin eine ("Gesamt-") Kalibrierung durch (Schritt S2 in Fig.2), welche in einer Ausführungsform einen Farbabgleich (Schritt S2a in Fig.2) umfassen kann. Der Farbabgleich kann von nur einer Kamera, z.B. der zweiten Kamera K2, oder von beiden Kameras K1 und K2 durchgeführt werden.

Erkennt die Steuereinrichtung C danach mittels des Winkelsensors W, dass die Tür T bei z.B. ihrer Schließbewegung die Auslösewinkelstellung ϕ erreicht hat, gibt sie ein Triggersignal an die Kameras K1 und K2 aus (Schritt S3 in Fig.2). Der Winkelsensor W kann beispielsweise ein magnetischer Sensor wie einen Hallsensor, ein Schalter usw. sein.

Mit Empfangen des jeweiligen Triggersignals werden die Kameras K1 und K2 ausgelöst und nehmen jeweils genau ein Bild auf (Schritt S4 in Fig.2).

Die Brennweite der beiden Kameras K1 und K2 ist so eingestellt, dass sie mit der Bildaufnahme scharfe Bilder des Ablageraums A bzw. der Türinnenseite aufnehmen. Da mit dem Triggersignal weder ein Farbabgleich noch eine Brennweiteneinstellung vorgenommen werden, werden die Bilder praktisch verzögerungsfrei aufgenommen. Dadurch wiederum ist die Position der Kameras K1 und K2 zu dem Ablageraum A bzw. zu der Türinnenseite zum Auslösezeitpunkt praktisch unabhängig von einer Winkelgeschwindigkeit der Tür T mit hoher Genauigkeit bekannt und kann z.B. der Position bei der Tür T in der Auslösewinkelstellung ϕ gleichgesetzt werden.

Die aufgenommenen Bilder werden von den Kameras K1 und K2 auf die Steuereinrichtung C übertragen (Schritt S5 in Fig.2), beispielsweise über eine USB-Schnittstelle. Die Steuereinrichtung C kann die Bilder selbst weiterverarbeiten, z.B. eine Farbkorrektur durchführen, eine Objekterkennung durchführen usw.

Die Steuereinrichtung C kann alternativ oder zusätzlich die Bilder zur Bildverarbeitung drahtlos oder drahtgebunden an eine externe Bildverarbeitungseinrichtung D übertragen, die sich z.B. in einer Cloud oder auf einem dedizierten Server befindet (Schritt S6 in Fig.2). Aus der Bildverarbeitung erlangte Information (z.B. ein farbkorrigiertes Bild, als anwesend oder als fehlend erkannte Objekte und/oder zugehörige Information wie ein abgelaufenes Haltbarkeitsdatum, die nächste Einkaufsmöglichkeit usw.) kann an das Haushaltsgerät F zurückgesandt werden und dort z.B. auf einem an der Außenseite der Tür T vorhandenen Bildschirm (o. Abb.) angezeigt werden.

Die Kameras K1 und K2 können z.B. ausgeschaltet werden, wenn die von Ihnen aufgenommenen Bilder auf die Steuereinrichtung C übertragen worden sind und/oder die Tür T wieder geschlossen worden ist (Schritt S7 in Fig.2).

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- K1: Kamera
- K2: Kamera
- A: Ablageraum
- B: Beschickungsöffnung
- C: Steuereinrichtung
- K: Kühlschrank
- R: Türöffnungssensor
- S1-S6: Verfahrensschritte
- T: Tür
- W: Winkelsensor
- ϕ: Auslösewinkelstellung

## Patentansprüche

1. Verfahren (S1-S4) zum Betreiben einer Kamera (K1, K2) eines Haushaltsgeräts (F), bei dem
- mit Öffnen einer Tür (T) des Haushaltsgeräts (F) eine Kalibrierung der Kamera (K1, K2) durchgeführt wird (S1),
- auf ein Erreichen einer vorgegebenen Winkelstellung (ϕ) der Tür (T) hin ein Triggersignal zum Auslösen der Kamera (K1, K2) ausgegeben (S3) wird und
- die Kamera (K1, K2) auf das Triggersignal hin mindestens ein Bild unter Unterlassung eines Farbabgleichs hin aufnimmt (S4).

2. Verfahren (S1-S4) nach Anspruch 1, bei dem ein Farbabgleich (S2a) mit der Kalibrierung (S2) der Kamera durchgeführt wird.

3. Verfahren (S1-S4) nach Anspruch 1, bei dem die Kamera (K1, K2) farbabgleichsfrei betrieben wird.

4. Verfahren (S1-S6) nach Anspruch 3, bei dem das Haushaltsgerät (F) eine erste Kamera (K1) zum Aufnehmen eines Bilds eines Ablageraums (A) und eine zweite Kamera (K2) zum Aufnehmen eines Bilds einer Innenseite der Tür (T) aufweist und an einem von der zweiten Kamera (K2) aufgenommenen Bild eine Farbkorrektur mittels eines von der ersten Kamera (K1) aufgenommenen Bilds durchgeführt wird.

5. Verfahren (S1-S6) nach Anspruch 4, bei dem die Farbkorrektur außerhalb des Haushaltsgeräts (F) durchgeführt wird (S6).

6. Verfahren (S1-S4) nach einem der vorhergehenden Ansprüche, bei dem die Kamera (K1, K2) einen festen Fokus aufweist.

7. Verfahren (S1-S4) nach einem der vorhergehenden Ansprüche, bei dem die Kamera (K1, K2) auf das Triggersignal hin genau ein Bild aufnimmt (S4).

8. Verfahren nach einem der vorhergehenden Ansprüche, bei dem die Kamera (K1, K2) mit einem Schließen der Tür (T) ausgeschaltet wird (S5).

9. Haushaltsgerät (F) mit mindestens einer Kamera (K1, K2) zur Aufnahme mindestens eines Bilds aus zumindest einem Teil eines Innenraums (T, A) des Haushaltsgeräts (F), **dadurch gekennzeichnet, dass** das Haushaltsgerät (F) dazu eingerichtet ist, mindestens eine Kamera (K1, K2) gemäß dem Verfahren nach einem der vorhergehenden Ansprüche zu betreiben.

## Claims

1. Method (S1-S4) for operating a camera (K1, K2) of a household appliance (F), wherein
- the camera (K1, K2) is calibrated when a door (T) of the household appliance (F) opens (S1),
- a trigger signal for triggering the camera (K1, K2) is output when a predetermined angular position (ϕ) of the door (T) is reached (S3) and
- the camera (K1, K2) captures at least one image without colour matching in response to the trigger signal (S4).

2. Method (S1-S4) according to claim 1, wherein colour matching (S2a) is performed with the calibration (S2) of the camera.

3. Method (S1-S4) according to claim 1, wherein the camera (K1, K2) is operated without colour matching.

4. Method (S1-S6) according to claim 3, wherein the household appliance (F) has a first camera (K1) for capturing an image of a storage chamber (A) and a second camera (K2) for capturing an image of an inner face of the door (T) and colour correction is performed on an image captured by the second camera (K2) by means of an image captured by the first camera (K1).

5. Method (S1-S6) according to claim 4, wherein the colour correction is performed outside the household appliance (F) (S6).

6. Method (S1-S4) according to one of the preceding claims, wherein the camera (K1, K2) has a fixed focal point.

7. Method (S1-S4) according to one of the preceding claims, wherein the camera (K1, K2) captures just one image in response to the trigger signal (S4).

8. Method according to one of the preceding claims, wherein the camera (K1, K2) is switched off when the door (T) closes (S5).

9. Household appliance (F) with at least one camera (K1, K2) for capturing at least one image from at least one part of an interior chamber (T, A) of the household appliance (F), **characterised in that** the household appliance (F) is set up to operate at least one camera (K1, K2) according to the method according to one of the preceding claims.

## Revendications

1. Procédé (S1 - S4) destiné au fonctionnement d'une caméra (K1, K2) d'un appareil ménager (F), dans lequel
- une calibration de la caméra (K1, K2) est réalisée (S1) à l'ouverture d'une porte (T) de l'appareil ménager (F),
- un signal de déclenchement destiné à déclencher la caméra (K1, K2) est sorti (S3) lorsqu'une position angulaire (ϕ) prédéfinie de la porte (T) est obtenue, et
- la caméra (K1, K2), en réponse au signal de déclenchement, capture (S4) au moins une image en omettant une balance des couleurs.

2. Procédé (S1 - S4) selon la revendication 1, dans lequel une balance des couleurs (S2a) est réalisée à l'aide de la calibration (S2) de la caméra.

3. Procédé (S1 - S4) selon la revendication 1, dans lequel la caméra (K1, K2) fonctionne sans balance des couleurs.

4. Procédé (S1 - S6) selon la revendication 3, dans lequel l'appareil ménager (F) présente une première caméra (K1) destinée à capturer une image d'un espace de stockage (A), et une deuxième caméra (K2) destinée à capturer une image d'un côté intérieur de la porte (T), et dans lequel une correction des couleurs est réalisée sur une image capturée par la deuxième caméra (K2) au moyen d'une image capturée par la première caméra (K1).

5. Procédé (S1 - S6) selon la revendication 4, dans lequel la correction de couleurs est réalisée (S6) à l'extérieur de l'appareil ménager (F).

6. Procédé (S1 - S4) selon l'une quelconque des revendications précédentes, dans lequel la caméra (K1, K2) présente un foyer fixe.

7. Procédé (S1 - S4) selon l'une quelconque des revendications précédentes, dans lequel la caméra (K1, K2) capture (S4) exactement une image en réponse au signal de déclenchement.

8. Procédé selon l'une quelconque des revendications précédentes, dans lequel la caméra (K1, K2) est mise hors service (S5) lors d'une fermeture de la porte (T).

9. Appareil ménager (F) comprenant au moins une caméra (K1, K2) destinée à capturer au moins une image à partir d'au moins une partie d'un espace intérieur (T, A) de l'appareil ménager (F), **caractérisé en ce que** l'appareil ménager (F) est configuré pour faire fonctionner au moins une caméra (K1, K2) suivant le procédé selon l'une quelconque des revendications précédentes.
